# EUROPEAN PATENT APPLICATION

(11) **EP 4 564 214 A1**
(43) Date of publication of application: **04.06.2025**
(21) Application number: 24165847.5
(22) Date of filing: 25.03.2024
(51) Int. Cl.: G06F 21/62, G06F 9/54, G06T 11/60

(54) **SCREENSHOT PREVENTION FOR PROTECTED CONTENT**

(30) Priority: 30.11.2023 IN 202311081358; 22.02.2024 US 202418584235
(71) Applicant: BOLD Limited, Hamilton, Bermuda HM09 (BM)
(72) Inventor: GRAZIANI, Giulia, Hamilton (BM); KATARIA, Raghvender, Hamilton (BM); BANSAL, Anshul, Hamilton (BM); ARORA, Antriksh, Hamilton (BM)
(74) Representative: Abel & Imray LLP

(57) **Abstract**

Certain aspects of the disclosure pertain to screenshot prevention for protected content. Actions, including user interactions, are monitored in response to generation and display of an image of a job application document. The actions are analyzed to detect or predict an attempt to screenshot the image. After an attempt is detected or predicted, a manipulated image is generated, and the displayed image is replaced with the manipulated image. Actions can continue to be monitored and analyzed, and the manipulated image can be replaced with the image after detecting one or more actions.

## Description

### CROSS-REFERENCE TO RELATED APPLICATIONS

This application claims priority to United States application number 18/584,235, filed February 22, 2024, and entitled "Screenshot Prevention for Protected Content," and to Indian application number 202311081358, filed November 30, 2023, and entitled "Screenshot Prevention for Protected Content".

### BACKGROUND

### Field

Aspects described herein relate to preventing screenshots of electronic content.

### Description of Related Art

The ability to capture screenshots has become an integral and ubiquitous feature across various computing devices. A screenshot, also referred to as a screen capture or screen grab, refers to capturing an image of what is currently displayed on a device's screen.

Methods for capturing screenshots differ across devices and operating systems. Common techniques include pressing a specific keyboard key or combination of keys (e.g., "Print Screen"), using dedicated software applications such as snipping and screen capture tools, or employing built-in functionality of a computing system as may be found in laptops, desktops, tablets, smartwatches, and other computing devices.

From a technological standpoint, capturing a screenshot involves the device's operating system retrieving the current graphical output and saving it, for example, in an image file compatible format, such as PNG, JPEG, or GIF. This process typically involves software routines and system-level access to retrieve and save the display data.

### SUMMARY

According to one aspect, a method comprises generating a job application document based on user input, creating an image of the job application document, rendering the image in a portion of a user interface, and transmitting the user interface with the image to a computing device for presentation of the user interface on a display of the computing device. The method further comprises receiving data from the computing device indicative of user interaction during the presentation, detecting an attempt to screenshot the image based on the data indicative of the user interaction, generating a manipulated image from the image in response to detecting the attempt to screenshot the image, and transmitting a modified user interface with the manipulated image to the computing device, wherein the manipulated image replaces the image as a screenshot.

According to another aspect, a method comprises receiving an image of a job application document generated based on user input, generating a manipulated image from the image, displaying the image in a portion of a window of a web browser, monitoring user interaction, detecting an attempt to screenshot the image based on the user interaction; and replacing the image with the manipulated image.

Other aspects provide processing systems configured to perform the aforementioned methods as well as those described herein; non-transitory, computer-readable media comprising instructions that, when executed by a processor of a processing system, cause the processing system to perform the aforementioned methods as well as those described herein; a computer program product embodied on a computer-readable storage medium comprising code for performing the aforementioned methods as well as those further described herein; and a processing system comprising means for performing the aforementioned methods as well as those further described herein.

The following description and the related drawings set forth in detail certain illustrative features of one or more aspects of this disclosure.

### DESCRIPTION OF THE DRAWINGS

The appended figures depict certain aspects and are, therefore, not to be considered limiting of the scope of this disclosure.
**FIG. 1** is a block diagram of a high-level overview of an example implementation of aspects associated with screenshot prevention.
**FIG. 2** is a block diagram of an example screenshot prevention system.
**FIG. 3** is a block diagram of an example architectural embodiment of screenshot prevention.
**FIG. 4** is a block diagram of an example architectural embodiment of screenshot prevention.
**FIG. 5** is a flow chart diagram of an example method of screenshot prevention.
**FIG. 6** is a block diagram of an operating environment within which aspects of the subject disclosure can be performed.

To facilitate understanding, identical reference numerals have been used, where possible, to designate identical elements common to the drawings. It is contemplated that elements and features of one embodiment may be beneficially incorporated into other embodiments without further recitation.

### DETAILED DESCRIPTION

Aspects described herein provide apparatuses, methods, processing systems, and computer-readable mediums for screenshot prevention for protected content. Screenshot functionality allows a user to capture and share information quickly and easily. Screenshots are beneficial in sharing portions of conversations, important documents, error messages, or other content for reference and discussion. However, screenshot functionality can also be employed for unauthorized content reproduction or acquisition. Content creators rely on sales, subscriptions, or licensing fees to sustain their work. Unauthorized content acquisitions deprive creators of earnings and discourage future work. Further, users engaging in authorized content reproduction or acquisitions can be subject to legal actions or penalties.

A technical problem exists with screenshot functionality in that content can be captured indiscriminately. Displayed content can quickly and easily be captured regardless of whether acquisition is authorized or unauthorized. Conventionally, watermarks can be applied to content before display; however, content creators often prefer not to watermark displayed content for aesthetic and user experience reasons. For example, watermarks can detract from the visual appeal of the content, disrupt the viewing experience, and obstruct content, thereby reducing the quality of the viewing experience.

Aspects described herein provide a technical solution to at least the aforementioned technical problem by preventing screenshots for protected content. Beneficially, a content creator can identify whether particular content is protected from capture (e.g., by screenshot) versus unprotected and thus available to be captured. Stated differently, a content creator can identify content for which screenshots are unauthorized or authorized. In some embodiments, actions associated with displayed content, including user interaction, can be monitored. An attempt to screenshot protected content can be detected or predicted based on analysis of the actions taking place on a user's computing device. In response to actions indicating an unauthorized screenshot, a manipulated image can be created that replaces the displayed image. In contrast to conventional watermarks, a manipulated image replaces the original when an attempt to screenshot is detected. Otherwise, the original image is visible without any negative impact on aesthetics or user experience.

Further, suppose a screenshot of an original protected image is taken and copied to a clipboard, avoiding initial prevention. In that case, content can be copied to the clipboard such that execution of paste functionality returns the content rather than the screenshot of the original protected image. The content can include substantially anything other than the original protected image, including, but not limited to, text, a solid color box, or another image, such as the manipulated image. In one instance, a screenshot of the manipulated image can be taken, which can automatically overwrite or replace the original protected image on the clipboard.

### Example Implementation of Screenshot Prevention

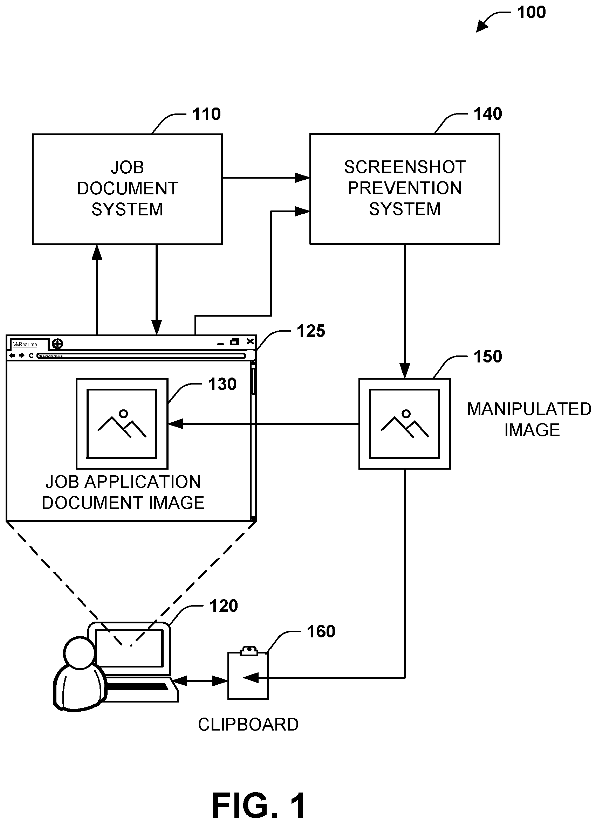

**FIG. 1** depicts a high-level overview of an example implementation 100 of aspects associated with screenshot prevention. The implementation 100 includes job document system 110, user computing device 120, web browser 125, job application document image 130, screenshot prevention system 140, manipulated image 150, and clipboard 160.

The job document system 110 is a content creation system configured to assist a user in generating, for example, a job application document. A job application document can be any document related to applying for a job, including at least a resume, curriculum vitae, cover letter, or other document provided by an applicant applying for employment. The job document system can generate organized and visually appealing documents while also optimizing for applicant tracking systems, among other things. It should be noted that although the embodiments disclosed herein are provided in the context of systems and methods for creating job application documents, the principles disclosed herein may be similarly applicable in other contexts having systems that create documents. Examples include but are not limited to form-filling systems, business document systems, tax document systems, governmental document systems, image creation systems, similar systems for the creation/preparation of documents, and systems that display visual content.

A user can interact with the job document system 110 through the computing device 120 and the web browser 125 executing on the user computing device 120. The user computing device 120 refers to any hardware device an individual employs to interact with and perform computing tasks (e.g., desktop computers, laptops, tablets, wearables), and the web browser is a software application that provides a user interface that allows a user to access, view, and interact with content. Although example embodiments herein disclose using a web browser, one or more applications capable of providing visual content may be similarly utilized.

In response to input from the user, the job document system 110 can generate a job application document. The job application document image 130 can be created and provided to the web browser 125 for display. In one instance, the job application document image 130 is created as a preview on a web page, for example, as a finalizing step of the job application document creation process. The job application document image 130 can be identified by the job document system 110 as protected content (e.g., a protected image) or, in other words, content with protection enabled. In response, the screenshot prevention system 140 can be activated.

The screenshot prevention system 140 is configured to monitor actions with respect to the job application document image 130 and intervene in the execution of screenshot functionality to capture the job application document image 130. In accordance with one embodiment, interface functionality can be disabled where available. For example, right-clicking on a mouse or the like can be disabled to prevent a screenshot of an element by copy or save image functionality enabled through right-clicking. Similarly, function keys can also be disabled or their inputs ignored or filtered.

For situations in which functionality is not or cannot be disabled, the screenshot prevention system 140 can generate a manipulated image 150 and present the manipulated image 150 in place of the original (unmanipulated) job application document image 130. The manipulated image 150, in this context, can be a modified version of the job application document image 130 that has been blurred or otherwise modified to render it unreadable or difficult to read or watermarked to include text or images that were not present in the job application document image 130. In an alternate embodiment, substantially any image or visual content can be utilized in place of the manipulated image 150 except protected content, including the original job application document image 130, such as a solid-color-filled image or graphic.

Various key press events can trigger a screen capture. Key press events can include key-down (keyboard key is pressed), key-up (pressed keyboard key is released), and key-hold (keyboard key is pressed and held down) events. For example, if one or more key-down events are detected, the screenshot prevention system 140 can replace the job application document image 130 with the manipulated image 150 before a key-up event that triggers a screen capture. Consequently, the image presented to the user and captured as the screenshot is the manipulated image 150 rather than the job application document image 130.

Users may utilize a snipping tool or other screen capture tool. These tools typically require a change of focus to a tool. The screenshot prevention system 140 can trigger image replacement with the manipulated image 150 when the web browser 125 is out of focus. Out of focus means the web browser is not the active window or does not currently have the user's attention. When snipping tools are utilized, the web browser 125 can be out of focus. As a result, image replacement can be triggered when the web browser is out of focus.

The screenshot prevention system 140 can also detect and respond to the injection of browser code into the web browser 125 associated with screenshot extensions. For example, screenshot extensions Nibmus ^{™} and Awesome^{™} add classes, such as "nsc-cropper-wrapper" and "as_select_wrapper" respectively, to a document object. After these classes are detected, the screenshot prevention system 140 can initiate the replacement of an image with a manipulated image.

There may be situations where a screenshot mechanism captures the original job application document image 130, circumventing initial prevention. For example, the screenshot prevention system 140 may not receive a key-down event for a function like print screen but rather solely a key-up event. By the time the screenshot prevention system 140 detects the key-up event, a screenshot would have been taken of the original job application document image 130. The print screen function can save a screenshot to clipboard 160. The clipboard is a temporary storage area in the memory or cache of the user computing device 120. To address this scenario, the screenshot prevention system 140 can save the manipulated image 150 to the clipboard 160. The manipulated image can be added to the clipboard 160 in a manner that replaces or otherwise results in a paste operation returning the manipulated image 150 rather than the job application document image 130. In accordance with one embodiment, the screenshot prevention system 140 can replace the original job application document image 130 with the manipulated image and trigger a screenshot of the manipulated image 150, which can replace the prior screenshot. Since a manipulated image need only be displayed when there is an attempt to take a screenshot, the screenshot prevention system 140 can also be configured to dynamically replace the manipulated image 150 with the original job application document image 130. The screenshot prevention system 140 can continue to monitor and analyze actions after replacing the job application document image 130 with the manipulated image 150. After detecting particular actions, the screenshot prevention system 140 can revert to the initial state of displaying the job application document image 130. These actions can indicate that there is no longer an attempt to screenshot the image or that the probability of a screenshot is below a threshold.

### Example System of Screenshot Prevention

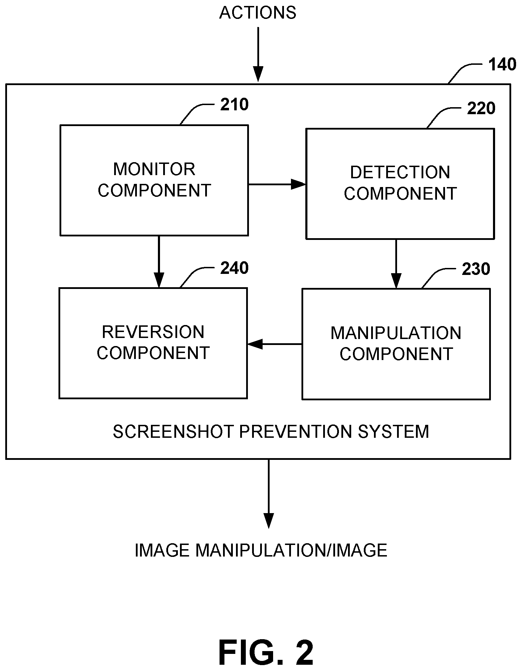

**FIG. 2** illustrates a block diagram of an example implementation of the screenshot prevention system 140 as described in **FIG. 1****.** In the depicted example, the screenshot prevention system 140 includes monitor component 210, detection component 220, manipulation component 230, and reversion component 240. The monitor component 210, detection component 220, manipulation component 230, and reversion component 240 can be implemented by at least one processor coupled to at least one memory that stores instructions that, when executed by the at least one processor, cause the processor to perform the functionality of each component when executed. Furthermore, all or a portion of the functionality of each component can be performed alone, in conjunction with, or by machine learning models. Consequently, a computing device can be configured to be a special-purpose device or appliance that implements the functionality of the screenshot prevention system 140. Further, all or portions of the screenshot prevention system 140 can be distributed across computing devices or made accessible through a network service in some embodiments.

The monitor component 210 is configured to monitor actions during the display of an image of protected content. The actions can include user interactions including key presses (e.g., key-down, key-up, key-hold), mouse movements, and window focus or activation. Actions can further include code alterations, for example, performed by extensions, which are additional software modules for customizing a web browser. In accordance with one embodiment, the monitoring can be performed on a local computing device, for example, by way of a browser script executing in a web browser. A browser script refers to code embedded within a web page that operates within the context of the web page (unlike extensions that operate across multiple web pages) and enables creation of interactive, dynamic, and responsive web applications. For example, the browser script can perform event handling that responds to user actions (e.g., key presses, clicks, mouse movements) by attaching event listeners to specific elements and triggering functions or actions when an event occurs. However, the monitoring could also be performed remotely via a network or a hybrid of remote and local monitoring.

The detection component 220 is configured to detect or predict an attempt to screenshot an image based on the actions captured by the monitor component 210. The detection component 220 can be configured to recognize a number of known methods for initiating screenshot functionality. For example, the detection component 220 can recognize key-up and key-down events, such as the print screen key, windows key, Ctrl and P key combination, and Ctrl, shift, and S key combination. Further, the detection component 220 can be configured to recognize out-of-focus events, and code additions or alterations indicative of screenshot functionality. The detection component 220 can also recognize preparatory actions performed before a screenshot and predict a screenshot attempt. For example, the detection component 220 can predict a screenshot attempt when zoom functionality is performed to show an entire image.

Furthermore, the detection component 220 can employ or incorporate a machine learning model that can be trained on historical data to predict the employment of screenshot functionality. The machine learning model can enable prediction based on characteristics and patterns of use behavior and user attributes and use behavior that otherwise may be unknown. In one instance, a user scaling content in a web page to fit into a single screen may indicate that a screenshot attempt is forthcoming. In another instance, it may be determined that users associated with a particular email address or internet protocol address are likely to attempt to screenshot content. A threshold may be set to reduce the number of false positives by filtering out predictions with a confidence score less than the threshold value.

The manipulation component 230 is configured to generate a manipulated image and output the manipulated image as a replacement for a displayed image in response to a detected or predicted attempt to execute screenshot functionality as determined by the detection component 220. In accordance with one embodiment, the manipulation can correspond to applying a blur to the image. A mathematical function can be applied to blur the image. For example, a new pixel value can be set to a weighted average of surrounding pixel values. In accordance with another embodiment, the manipulations can correspond to adding a watermark to the image. Other manipulations are also possible and contemplated including but not limited to any number of image filters. In accordance with one embodiment, the manipulation component 230 or a different component can also trigger the display of a message indicating why a manipulated image is being displayed, for example, as part of a pop-up box or other user interface element.

The reversion component 240 is configured to revert the system to the unmanipulated image. The manipulated image can be generated and displayed when actions indicate the possibility of a screenshot occurring. Otherwise, the image can be displayed without manipulation even after the screenshot prevention system 140 triggers replacing the image with a manipulated image. The reversion component 240 receives actions captured by the monitor component 210. When certain actions are detected, the reversion component 240 triggers replacing the manipulated image with the unmanipulated image. Example actions include detecting in-focus or window activation after the window is out of focus or inactive and other visibility changes, such as switching back to a web browser tab after switching to another tab. Further actions can include a scroll operation and a click anywhere on a screen. In accordance with one embodiment, functions can be applied to an original image to produce the manipulated image. Accordingly, returning the original image can correspond to not applying a function. In another embodiment, the manipulated and unmanipulated images can both be loaded into memory (e.g., browser cache), but only one is displayed at a time.

### Example Architectural Embodiments of Screenshot Prevention

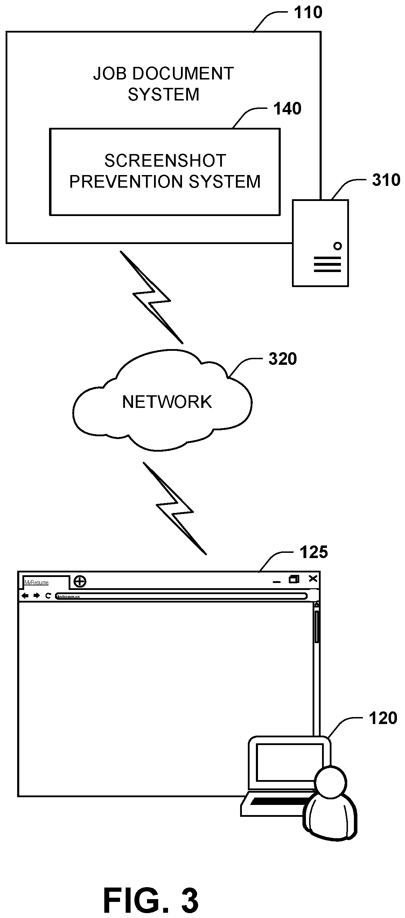

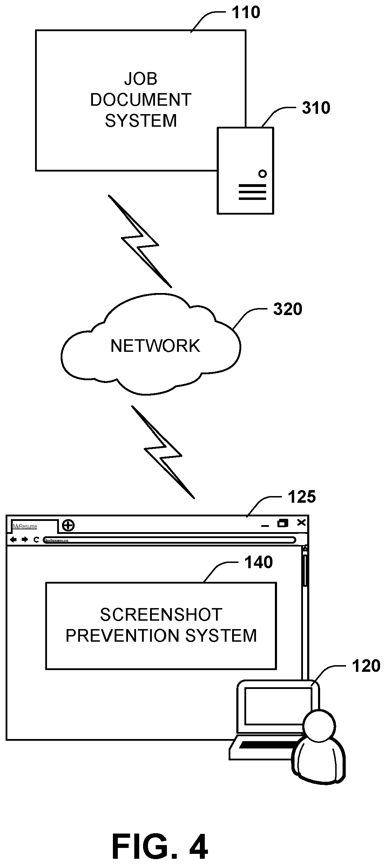

**FIG. 3** and **FIG. 4** depict example architectural embodiments of screenshot prevention. The provided architectural embodiments include solely two of numerous potential architectural embodiments. These embodiments are not provided to limit aspects of the disclosure but rather to aid in clarity and understanding.

**FIG. 3** illustrates a first example architectural embodiment. In this embodiment, the job document system 110 includes the screenshot prevention system 140, each initially described with respect to **FIG. 1****.** The job document system 110 thus includes or incorporates the screenshot prevention system 140 as a subsystem in this example embodiment.

Further, functionality of the job document system 110 and the screenshot prevention system 140 can be resident and executed on server 310. The server 310 is a computer system that provides services, resources, or functionalities to other computers, known as clients, and is designed with specialized software to handle requests, process data, and deliver information to multiple clients connected to network 320.

The network 320 corresponds to a collection of interconnected devices, such as computers, servers, routers, and switches, which can communicate and share resources. Examples of network 320 include a local area network (LAN), wide area network (WAN), client-server network, and the Internet.

The user computing device 120 refers to any hardware device an individual employs to interact with and perform computing tasks. Example user computing devices include desktop computers, laptops, tablets, or any other device capable of processing data and executing applications. In this embodiment, the user computing device executes web browser 125.

The web browser is a software application that allows users to access, view, and interact with content over the network 320. Although not limited thereto, the web browser 125 can correspond to a desktop web browser in one embodiment. A desktop web browser is typically designed for mouse or trackpad navigation and supports complex web applications, extensions, and plugins.

A user can employ the web browser 125 to interact with the job document system 110 and screenshot prevention system 140. For example, a user can interact with the job document system 110, which creates a resume for the user, generates an image of the resume, and transmits the image of the resume to the browser for display. The screenshot prevention system can receive information from the browser regarding activities, including user interaction, to monitor and detect or predict an attempt to capture a screenshot of the resume image. If the screenshot prevention system 140 detects an attempt to capture a screenshot of the resume image, the resume image can be manipulated, for example, by blurring the image, adding a watermark, or both. In one instance, a new web page, including the manipulated image, can be generated and transmitted over the network 320 for display by the web browser 125. Alternatively, a web page, including the resume image, can include code to manipulate the resume image automatically in response to a triggering event. For example, a blur method can be executed on the resume image.

**FIG. 4** illustrates a second architectural embodiment. Similar to the first architectural embodiment of **FIG. 3****,** the second architectural embodiment includes job document system 110 executing on server 310 and communicating with the user computing device 120, executing the web browser 125, over the network 320. However, the second architectural embodiment moves the screenshot prevention system 140 to the web browser 125. In one instance, the screenshot prevention system 140 can be embodied as code transmitted with an image of a job application document from the job document system 110. Alternatively, the screenshot prevention system can be embodied as a browser extension, which may be necessary to install prior to interacting with job document system 110. Regardless of the implementation, the screenshot prevention system 140 can operate locally in the browser to monitor, detect, and replace an image of a job application document, such as a resume, received from the job document system 110 with a manipulated image.

### Example Method of Screenshot Prevention

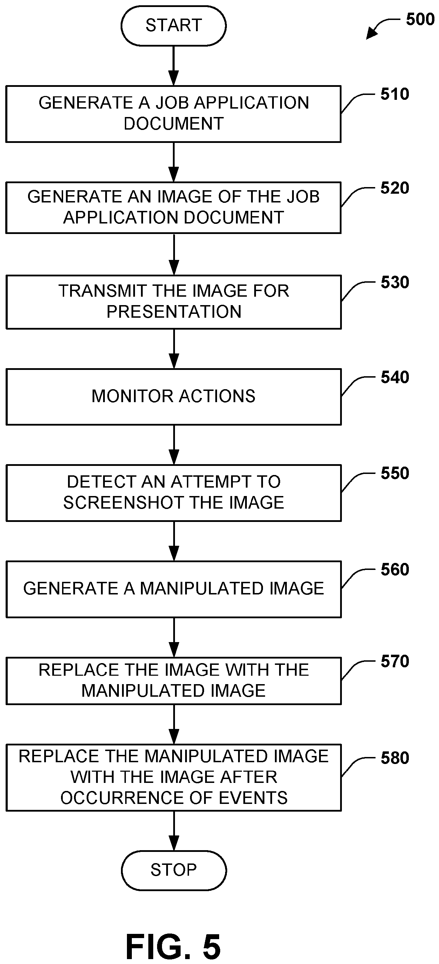

**FIG. 5** depicts an example method 500 of workflow assistance. In one aspect, method 500 can be implemented by the job document system 110 and screenshot prevention system 140 of **FIG. 1****.**

Method 500 starts at block 510 with generating a job application document, such as a resume or cover letter. For example, a user can interact with the job document system 110 by providing information regarding themselves to the job document system 110, which in response generates an aesthetically pleasing job application document optionally optimized for processing by automated systems.

Method 500 then proceeds at block 520 with generating an image of the job application document. The job application document can be generated in various electronic file formats conducive to submission. For example, a job application document, such as a resume, can be created in portable document format (PDF). For ease of display, an image of the document can be created. Further, the image of the document can be provided as a preview of the document for finalization.

The method 500 then proceeds at block 530 with transmitting the image for presentation. For example, the image can be transmitted by the job document system 110 over network 320 to the user computing device 120 for display in the web browser 125.

Method 500 then proceeds at block 540 with monitoring actions. Actions can be observed and captured, including user interactions and code alteration. For example, keyboard key presses and releases can be captured. In one instance, browser code can capture actions for subsequent analysis and processing. In the architecture of **FIG. 3** where the screenshot prevention system 140 is remote, browser code can be added to the web page displayed by the web browser that detects actions as events and reports the actions back to the screenshot prevention system 140. In the architecture of **FIG. 4****,** where the screenshot prevention system is local to the browser, the browser code can detect actions as events and apply a function to handle certain actions.

The method 500 then proceeds at block 550 with detecting an attempt to screenshot visual content. An attempt to screenshot visual content, such as an image, can be detected based on the actions captured during the monitoring. In accordance with one embodiment, an attempt to screenshot visual content can be determined based on actions known to initiate screen capture, such as particular keyboard keys, key combinations, and window focus change. Additionally, a machine learning model can be employed to predict screenshot attempts based on training with historical data.

The method 500 then proceeds at block 560 with generating a manipulated image. The manipulated image can correspond to a blurred image or watermarked image. Other manipulations can also correspond to applying one or more image filters. With respect to the architecture of **FIG. 3****,** where the screenshot prevention system 140 is remote, a manipulated image can be generated on the server. Alternatively, the screenshot prevention system 140 can invoke a browser script function that generates the manipulated image in the web browser. For example, a blur function or method can be executed on the original unmanipulated image to produce the manipulated image. As per the architecture of **FIG. 4****,** a browser script can be utilized to create the manipulated image, or the manipulated image can be retrieved from a network storage location.

The method 500 then proceeds at block 570 with replacing the image with the manipulated image. With respect to the architecture of **FIG. 3****,** the remote screenshot prevention system can trigger reloading of the web page to include the manipulated image. In the architecture of **FIG. 4****,** the browser code can implement a dynamic switch of images. In one instance, any captured screenshots would be of the manipulated image rather than the image. Furthermore, even if a screenshot of the image is captured, the screenshot can be replaced on the clipboard by the manipulated image.

The method 500 continues next at block 580 with replacing the manipulated image with the image. The image replaces the manipulated image after detecting certain events or actions. Example actions include returned focus, a scroll operation, and movement of the pointer on the display. In this manner, the display can be reverted to the initial image when there is no longer a threat of a screenshot attempt.

Note that **FIG. 5** is just one example of a method, and other methods including fewer, additional, or alternative steps are possible consistent with this disclosure.

### Example Processing System for Screenshot Prevention

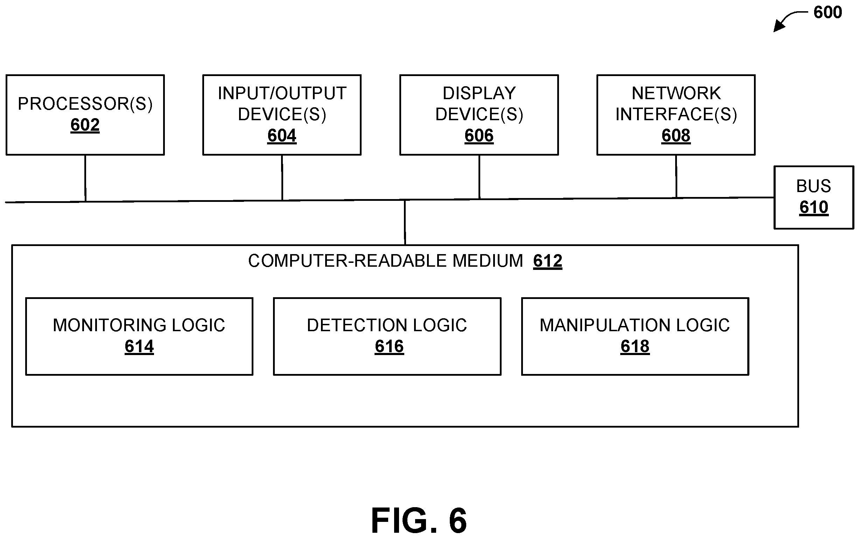

**FIG. 6** depicts an example processing system 600 configured to perform various aspects described herein, including, for example, the method 500 as described above with respect to **FIG. 5** as well as other methods described herein.

Processing system 600 is generally an example of an electronic device configured to execute computer-executable instructions, such as those derived from compiled or interpreted computer code, including without limitation personal computers, tablet computers, servers, smart phones, smart devices, wearable devices, augmented or virtual reality devices, and others.

In the depicted example, processing system 600 includes one or more processors 602, one or more input/output devices 604, one or more display devices 606, and one or more network interfaces 608 through which processing system 600 is connected to one or more networks (e.g., a local network, an intranet, the Internet, or any other group of processing systems communicatively connected to each other), and computer-readable medium 612.

In the depicted example, the aforementioned components are coupled by a bus 610, which may generally be configured for data or power exchange amongst the components. Bus 610 may be representative of multiple buses, while only one is depicted for simplicity. Alternatively, one or more of the aforementioned components may be located remotely and accessed via a network.

Processor(s) 602 are generally configured to retrieve and execute instructions stored in one or more memories, including local memories like the computer-readable medium 612, as well as remote memories and data stores. Similarly, processor(s) 602 are configured to retrieve and store application data residing in local memories like the computer-readable medium 612, as well as remote memories and data stores. More generally, bus 610 is configured to transmit programming instructions and application data among the processor(s) 602, display device(s) 606, network interface(s) 608, and computer-readable medium 612. In certain embodiments, processor(s) 602 are included to be representative of one or more central processing units (CPUs), graphics processing units (GPUs), tensor processing units (TPUs), accelerators, and other processing devices.

Input/output device(s) 604 may include any device, mechanism, system, interactive display, or various other hardware components for communicating information between processing system 600 and a user of processing system 600. For example, input/output device(s) 604 may include input hardware, such as a keyboard, touch screen, button, microphone, or other device for receiving inputs from the user. Input/output device(s) 604 may further include display hardware, such as, for example, a monitor, a video card, or other device for sending or presenting visual data to the user. In certain embodiments, input/output device(s) 604 is or includes a graphical user interface.

Display device(s) 606 may generally include any device configured to display data, information, graphics, user interface elements, and the like to a user. For example, display device(s) 606 may include internal and external displays, such as an internal display of a tablet computer or an external display for a server computer or a projector. Display device(s) 606 may further include displays for devices, such as augmented, virtual, or extended reality devices.

Network interface(s) 608 provide processing system 600 access to external networks and processing systems. Network interface(s) 608 can generally be any device capable of transmitting or receiving data through a wired or wireless network connection. Accordingly, network interface(s) 608 can include a transceiver for sending or receiving wired or wireless communication. For example, Network interface(s) 608 may include an antenna, a modem, a LAN port, a Wi-Fi card, a WiMAX card, cellular communications hardware, near-field communication (NFC) hardware, satellite communication hardware, or any wired or wireless hardware for communicating with other networks or devices/systems. In certain embodiments, network interface(s) 608 includes hardware configured to operate in accordance with the Bluetooth^{®} wireless communication protocol.

Computer-readable medium 612 may be a volatile memory, such as a random access memory (RAM), or a non-volatile memory, such as non-volatile random access memory, phase change random access memory, or the like. In this example, computer-readable medium 612 includes monitoring logic 614, detection logic 616, and manipulation logic 618.

In certain embodiments, monitoring logic 614 observes and captures user interaction and code alteration actions for subsequent processing. For example, the monitoring logic can capture key presses and releases during display of a job application document in a web browser. The screenshot prevention system 140 of **FIGS. 1-4****,** including monitor component 210 of **FIG. 2****,** can perform the monitoring logic 614.

In certain embodiments, detection logic 616 can detect or predict an attempt to screenshot an image. The detection logic 616 can be performed by the screenshot prevention system 140 of **FIGS. 1-4****,** including detection component 220 of **FIG. 2****.**

In certain embodiments, manipulation logic 618 can generate a manipulated image and replace the image with the manipulated image. The manipulation logic 618 can be performed by the screenshot prevention system 140 of **FIGS. 1-4****,** including manipulation component 230 of **FIG. 2****.**

Note that **FIG. 6** is just one example of a processing system consistent with aspects described herein, and other processing systems having additional, alternative, or fewer components are possible consistent with this disclosure.

### Example Clauses

Implementation examples are described in the following numbered clauses:
Clause 1: A method, comprising: generating a job application document based on user input, creating an image of the job application document, rendering the image in a portion of a user interface, transmitting the user interface with the image to a computing device for presentation of the user interface on a display of the computing device, receiving data from the computing device indicative of user interaction during the presentation, detecting an attempt to screenshot the image based on the data indicative of the user interaction, generating a manipulated image from the image in response to detecting the attempt to screenshot the image, and transmitting a modified user interface with the manipulated image to the computing device, wherein the manipulated image replaces the image as a screenshot.
Clause 2: The method of Clause 1, wherein generating the manipulated image comprises applying a blur to the image.
Clause 3: The method of Clauses 1 - 2, wherein generating the manipulated image comprises adding a watermark to the image.
Clause 4: The method of Clauses 1 - 3, wherein receiving the data indicative of the user interaction comprises receiving one or more keystrokes.
Clause 5: The method of Clauses 1-4, wherein detecting an attempt to screenshot the image comprises identifying one or more of the one or more keystrokes that initiate screenshot functionality.
Clause 6: The method of Clauses 1 - 5, wherein receiving the data indicative of user interaction comprises receiving one or more keystrokes that initiate a print preview.
Clause 7: The method of Clauses 1-6, wherein detecting the attempt to screenshot the image comprises detecting the user interface is out of focus from the data indicative of user interaction.
Clause 8: The method of Clauses 1 - 7, wherein the user interface is out of focus when a snapshot tool is in focus.
Clause 9: The method of Clauses 1 - 8, wherein detecting the attempt to screenshot the image comprises detecting a code addition to the user interface by an extension.
Clause 10: The method of Clauses 1 - 9, further comprising triggering execution of code on the computing device to copy the manipulated image to a clipboard overwriting the image.
Clause 11: A method, comprising: receiving an image of a job application document generated based on user input, generating a manipulated image from the image, displaying the image in a portion of a window of a web browser, monitoring user interaction, detecting an attempt to screenshot the image based on the user interaction, and replacing the image with the manipulated image.
Clause 12: The method of Clause 11, where generating the manipulated image comprises blurring the image or adding a watermark to the image.
Clause 13: The method of Clauses 11-12, wherein detecting the attempt to screenshot the image further comprises identifying a keystroke or combination of keystrokes that trigger screenshot functionality.
Clause 14: The method of Clauses 11-13, wherein replacing the image with the manipulated image comprises copying the manipulated image to a clipboard to replace the image.
Clause 15: A processing system, comprising: a memory comprising computer-executable instructions and a processor configured to execute the computer-executable instructions and cause the processing system to perform a method in accordance with any one of Clauses 1 - 14.
Clause 16: A processing system, comprising means for performing a method in accordance with any one of Clauses 1 - 14.
Clause 17: A non-transitory computer-readable medium storing program code for causing a processing system to perform the steps of any one of Clauses 1 - 14.
Clause 18: A computer program product embodied on a computer-readable storage medium comprising code for performing a method in accordance with any one of Clauses 1-14.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from those described, and various steps may be added, omitted, or combined. Also, features described with respect to some examples may be combined in some other examples. For example, an apparatus may be implemented, or a method may be practiced using any number of the aspects set forth herein. In addition, the scope of the disclosure is intended to cover such an apparatus or method practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database, or another data structure), ascertaining, and the like. Also, "determining" may include receiving (e.g., receiving information), accessing (e.g., accessing data in a memory), and the like. Also, "determining" may include resolving, selecting, choosing, establishing, and the like.

The methods disclosed herein comprise one or more steps or actions for achieving the methods. The method steps or actions may be interchanged with one another without departing from the scope of the claims. In other words, unless a specific order of steps or actions is specified, the order or use of specific steps or actions may be modified without departing from the scope of the claims. Further, the various operations of methods described above may be performed by any suitable means capable of performing the corresponding functions. The means may include various hardware or software component(s) or module(s), including, but not limited to a circuit, an application specific integrated circuit (ASIC), or processor. Generally, where operations are illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. § 1 12(f) unless the element is expressly recited using the phrase "means for" or, in the case of a method claim, the element is recited using the phrase "step for." All structural and functional equivalents to the elements of the various aspects described throughout this disclosure that are known or later become known to those of ordinary skill in the art are expressly incorporated herein by reference and are intended to be encompassed by the claims. Moreover, nothing disclosed herein is intended to be dedicated to the public, regardless of whether such disclosure is explicitly recited in the claims.

## Claims

1. A method, comprising:
generating a job application document based on user input;
creating an image of the job application document;
rendering the image in a portion of a user interface;
transmitting the user interface with the image to a computing device for presentation of the user interface on a display of the computing device;
receiving data from the computing device indicative of user interaction during the presentation;
detecting an attempt to screenshot the image based on the data indicative of the user interaction;
generating a manipulated image from the image in response to detecting the attempt to screenshot the image; and
transmitting a modified user interface with the manipulated image to the computing device, wherein the manipulated image replaces the image as a screenshot.

2. The method of claim 1, wherein generating the manipulated image comprises applying a blur to the image.

3. The method of claim 1 or 2, wherein generating the manipulated image comprises adding a watermark to the image.

4. The method of any preceding claim, wherein receiving the data indicative of the user interaction comprises receiving one or more keystrokes.

5. The method of claim 4, wherein detecting the attempt to screenshot the image comprises identifying one or more of the one or more keystrokes that initiate screenshot functionality.

6. The method of any preceding claim, wherein receiving the data indicative of user interaction comprises receiving one or more keystrokes that initiate a print preview.

7. The method of any preceding claim, wherein detecting the attempt to screenshot the image comprises detecting the user interface is out of focus from the data indicative of user interaction.

8. The method of claim 7, wherein the user interface is out of focus when a snapshot tool is in focus.

9. The method of any preceding claim, wherein detecting the attempt to screenshot the image comprises detecting a code addition to the user interface by an extension.

10. The method of any preceding claim, further comprising triggering execution of code on the computing device to copy the manipulated image to a clipboard overwriting the image.

11. A screenshot prevention system, comprising:
at least one processor; and
at least one memory coupled to the at least one processor that stores instructions, that when executed by the at least one processor, cause the screenshot prevention system to:
generate a job application document based on user input;
create an image of the job application document;
render the image in a portion of a user interface;
transmit the user interface with the image to a computing device for presentation of the user interface on a display of the computing device;
receive data from the computing device indicative of user interaction during the presentation;
detect an attempt to screenshot the image based on the data indicative of the user interaction;
generate a manipulated image from the image in response to detecting the attempt to screenshot the image; and
transmit a modified user interface with the manipulated image to the computing device, wherein the manipulated image replaces the image as a screenshot.

12. The screenshot prevention system of claim 11, wherein generate the manipulated image further comprises instructions that cause the screenshot prevention system to apply blur to the image.

13. The screenshot prevention system of claim 11 or 12, wherein generate the manipulated image further comprises instructions that cause the screenshot prevention system to add a watermark to the image.

14. The screenshot prevention system of any of claims 11 to 13, wherein detect an attempt to screenshot the image further comprises instructions that cause the screenshot prevention system to determine that the user interface is out of focus based on focus data received from the computing device.

15. The screenshot prevention system of any of claims 11 to 14, wherein detect an attempt to screenshot the image further comprises instructions that cause the screenshot prevention system to detect addition of code by a screen-capture browser extension.
